# EUROPÄISCHE PATENTSCHRIFT

(11) **EP 2 751 457 B1**
(45) Veröffentlichungstag und Bekanntmachung des Hinweises auf die Patenterteilung: **09.11.2016**
(21) Anmeldenummer: 12753494.9
(22) Anmeldetag: 03.09.2012
(51) Int. Cl.: F16K 17/16, F16K 17/40, F28F 27/00

(54) **VERBINDUNGSSTÜCK EINER TRANSPORTLEITUNG**
CONNECTING PIECE OF A TRANSPORT LINE
RACCORD DE CONDUIT DE TRANSPORT

(30) Priorität: 02.09.2011 EP 11179847; 29.11.2011 CN 201120484015 U
(43) Veröffentlichungstag der Anmeldung: 09.07.2014
(73) Patentinhaber: Aurotec GmbH, 4840 Vöcklabruck (AT)
(72) Erfinder: ZIKELI, Stefan, A-4844 Regau (AT); ECKER, Friedrich, A-4850 Timelkam (AT)
(74) Vertreter: Sonn & Partner Patentanwälte
(86) Internationale Anmeldenummer: PCT/EP2012/067086
(87) Internationale Veröffentlichungsnummer: WO 2013/030405

(56) Entgegenhaltungen:
- EP-A1- 0 789 822
- WO-A1-2009/000642
- DE-A1- 2 658 225
- GB-A- 2 028 426
- US-A- 4 046 280
- US-A1- 2010 305 883

## Beschreibung

Die Erfindung betrifft eine Vorrichtung und Verfahren zum Transportieren viskoser und thermisch sensitiver Fluide durch eine Leitung zusammengesetzt aus Wärmetauscher Teilleitungen, Anschlussstücken, Zwischenstücken, Umlenkstücken, Verteilstücken, Pumpen, Filter, etc..

Die Verwendung von Druckentlastungsvorrichtungen ist allgemein bekannt. Übliche Mittel umfassen beispielsweise Berstscheiben, welche eine Membran aufweisen, die unter Wirkung eines Drucks, der höher ist als der normale Betriebsdruck, aber geringer ist als der Druck, bei dem ein Rohr oder Gefäß selbst bricht, bersten, wodurch eine Druckentlastung mit einem Außenraum ermöglicht wird.

Berstscheiben sind beispielsweise in der US 6,241,113, US 3,845,879, US 2008/0202595, EP 1 591 703 und der US 7,870,865 beschrieben. Manche Berstscheiben können Perforationen aufweisen, um ein Aufsprengen an mehreren Stellen oder entlang von Sollbruchstellen zu gewährleisten um den Entlastungsquerschnitt maximal frei zu geben.

Berstscheiben können in diversesten Vorrichtungen, welche versuchen die Wirkung der Berstscheiben zu kontrollieren, eingesetzt werden. So beschreibt die US 4,079,854 eine Vorrichtung, welche eine Schneideinrichtung mit einem Messer, welches eine zur Ableitung konkave, zum Druckraum konvexe, Berstscheibe nach Druckeinwirkung aufreißt.

Die US 3,872,874 beschreibt eine Berstscheibenvorrichtung mit einer konvexen Berstscheibe welche bei Druckausdehnung gegen einen Schneiddorn gepresst wird.

Die US 4,590,957 betrifft eine Vorrichtung, in der eine flache Berstscheibe vor Torsionen geschützt wird.

In der EP 1 892 445 wird eine Berstscheibenanordnung beschrieben, welche mehrere Ringe aufweist, die bei Druckeinwirkung einen Fluiddurchlass bewirken.

Die WO 2005/054731 betrifft eine Berstscheibenanordnung mit einem Druckdetektor.

Die EP 789 822 betrifft eine Drucksicherheitsvorrichtung für thermisch instabile viskose Massen, wie Cellulose, Wasser, NMMO (N-Methylmorpholin-N-oxid) Lösungen, in der ein Berstelement in den Innenraum eines Transportrohres einragt.

US 4,046,280 A beschreibt ein Sicherheitselement für ein Druckgefäß. Das Sicherheitsstück enthält eine Berstscheibe, welche einen Abfluss bei Überdruck freilegt und ansonsten versperrt. Im Bereich vor der Berstscheibe befindet sich eine Abschirmung (engl. "screen") einer Schutzvorrichtung (engl. "disc protective unit"), welche die Berstscheibe schützen soll. Die Schutzvorrichtung ist ein Membran-überzogenes Gitter, welches ein Spülen der Scheibe verhindert.

DE 26 58 225 A1 betrifft eine Sicherheitsarmatur für Rohrleitungen und Behälter mit einer Berstmembran, welche durch einen siebartig durchbrochenen Stützkörper gegen den Betriebsdruck abgestützt werden soll. Hierzu weist der Stützkörper mehrere parallele Bohrungen in Achsrichtung auf, welche im Berstfall durchströmt werden. Diese verhindern ein Spülen im geschlossenen abgedichteten Zustand der Scheibe.

GB 2 028 426 A beschreibt eine Armatur mit einer Berstscheibe. Hinter der Berstscheibe, in Richtung des Abflussrohres, weist diese Armatur eine Bohrung auf.

US 2010/305883 A1 beschreibt ein Ventil, in dem im Ausflussbereich ein Temperatursensor vorgesehen ist.

EP 0 789 822 A1 beschreibt ein Transportrohr für Cellulose-NMMO-Gemische mit einer Berstscheibe (13), welche auf einer Halterung in das Rohr hinein ragt.

Die US 5,337,776 betrifft eine Wärmetauscherleitung mit einer Überdruckentlastungsvorrichtung, wobei eine Berstscheibe in der Innenseite der Wand des Rohres bündig liegt, damit ein Umspülen der Berstscheibe mit transportierter Flüssigkeit bewerkstelligt wird. Dieses Umspülen soll die Entstehung von Toträumen vermeiden, in denen sich Flüssigkeiten oder andere Bestandteile der transportierten Flüssigkeit anlagern. Dieses Ziel wir auch in der EP 789 822 verfolgt.

Beim Transport von viskosen und thermisch instabiler bzw. thermisch sensitiver Massen, insbesondere solchen welche nur durch Erwärmen flüssig gehalten werden und bei Abkühlung zum Verklumpen neigen oder zu Ablagerungen führen, war es ein Ziel, z.B. der EP 789 822 und der US 5,337,776, von einer Rohrleitung zurückversetzte Räume, in denen sich diese Massen ablagern können - als Toträume bezeichnet - zu vermeiden. Ablagerungen vor Berstscheiben wurden als Gefahr für deren Funktionalität angesehen, wobei es zu gefährlichen Überdrücken kommen kann.

Erfindungsgemäß hat sich herausgestellt, dass die Vermeidung von Toträumen nicht ausreichend ist, um Berstscheiben oder allgemein Überdruck-Freigabekomponenten, inklusive Ventile, vor Ablagerungen zu schützen. In der US 5, 337, 776 wird gelehrt dass die Berstscheibe, eingebaut in eine Rohrleitung, so ausgeführt sein soll, dass die Berstmembran bündig in der Wand der Rohrleitung sitzt. Zu diesem Zweck muss die Rohrleitung nach US 5, 337, 776 derart konstruiert und gebaut sein, dass das durchgehende Masserohr, sowie der Thermostatmantel des Rohres unterbrochen werden muss und somit in der Rohrleitung eine inhomogene Thermostatisierungzone vorhanden ist. Diese ungenügende Thermostatisierungszone (Kaltstellen im Verlauf der Rohrleitung) wirkt sich negativ auf das Fließverhalten von warmen hoch- und strukturviskosen Polymermassen (wie Cellulose/Wasser/NMMO-Lösungen) aus.

Ein weiterer wesentlicher Nachteil der US 5, 337, 776 liegt darin, dass die in der Patentschrift beschriebene Berstscheibe notgedrungen auf einen zylindrischen Trägerkörper aufgeschweißt werden muss. Die bündige Fixierung der Berstscheibe im Innenraum eines Rohres oder in der Rohrwand ist aufwändig und erfordert das Anschweißen der Berstscheibe mittels Elektronenstrahlschweißverfahren. Zudem können keine handelsüblichen Berstscheiben verwendet werden.

Es ist ein Ziel der vorliegenden Erfindung alternative Druckentlastungsvorrichtungen bereitzustellen, welche die Nachteile der bisherigen Vorrichtungen vermeiden und auf einfache Art und Weise den Einsatz von Druckentlastungselementen wie Berstscheiben und dgl. ermöglicht.

Die Erfindung liefert eine temperiertes Verbindungsstück ("Fitting") zum Transport eines viskosen Fluids mit einer Überdruck-Freigabekomponente, welches das Innere des Verbindungsstücks von einer Abflussleitung trennt. Die Überdruck-Freigabekomponente kann mit einem äußeren Rand an der Abflussleitung fixiert sein. Die Überdruck-Freigabekomponente ist derart eingerichtet, um bei einem vorgegebenen Überdruck im Verbindungsstück Fluiddurchfluss freizugeben. Im Inneren des Verbindungsstücks kann ein Mischelement vorgesehen sein, welches einen Fluidstrom im Bereich der Überdruck-Freigabekomponente durchmischt. Dadurch wird eine Überdruckentlastungsvorrichtung zum Transport eines viskosen thermisch sensitiven Fluids mit einer Überdruck-Freigabekomponente, welche das Innere einer Fluidleitung, insbesondere einer Wärmetauscherleitung, von einer Abflussleitung trennt und an einem äußeren Rand an der Abflußleitung fixiert ist, zur Verfügung gestellt. Das erfindungsgemäße Verbindungsstück wird vorzugsweise in eine Wärmetauscherleitung eingebaut, worin ein Fluid temperiert transportiert wird. Der Transport wird insbesondere durch einen erhöhten Druck im Bereich von 1 bis 250 bar bewerkstelligt, wobei das erfindungsgemäße Verbindungsstück als Überdruckentlastung dient, sobald der Druck ein kritisches Ausmaß übersteigt. Die Überdruck-Freigabekomponente wird so gewählt, damit sie bei normalem Betriebsdruck die Abflussleitung vom Inneren des Verbindungsstücks, in dem das Fluid transportiert wird, trennt und bei einem gewählten Druck die Abflußleitung freigibt, sodass Fluid entweichen kann. Die gegenständliche Erfindung wird weiter durch die Ansprüche beschrieben.

Das erfindungsgemäße Verbindungsstück wird insbesondere zum Transport von hochviskosen und/oder thermisch instabilen Fluiden benutzt, welche in Wärmetauscherleitungen transportiert werden müssen, um eine Temperaturregulierung des Fluids zu ermöglichen. Auch im erfindungsgemäßen Verbindungsstück wird eine Temperaturregulierung bewerkstelligt.

Ein bisheriges Problem bei Berstelementen beim Transport viskoser bzw. temperatur-sensitiver Fluide waren die verursachten Temperaturschwankungen in der Fluidleitung - selbst wenn Berstelemente in von außen temperierte Wärmetauscher, wie beispielsweise in der WO94/28213 A1 beschrieben, eingebracht wurden. Dadurch entstanden Inhomogenitäten im Temperatur- aber auch im Viskositätsprofil der Fluide, welche zu lokalen Ablagerungen oder Überdrücken führen kann. Erfindungsgemäß wird um auf die Temperatur- und Viskositätsgleichmäßigkeit einzuwirken, bei gleichzeitigem Einbau eines Berstelements, das Verbindungsstück temperiert. Es hat sich gezeigt, dass durch die erfindungsgemäßen Vorrichtungen Überdruck-Freigabekomponenten nicht bloß auf Berstelemente eingeschränkt sind, sondern es können auch andere Komponenten, wie z.B. Überdruckventile nun eingesetzt werden. Die Temperierung kann durch thermische Isolierung des Verbindungsstücks und/oder durch Heiz- oder Kühlelemente (8) erfolgen. Um das Fluid auf einer gewünschten Temperatur zu halten kann rein einfache thermische Isolierung ausreichend sein, wenn das Fluid selbst die gewünschte Wärme zum Transport führt, bzw. aufgrund von Reibungsverlusten erzeugt. Das Verbindungselement ist vorzugsweise ein massiver Block eines wärmeleitenden Materials mit ausreichender Wärmekapazität, sodass bei äußerer Wärmeisolierung eine homogene Wärmeverteilung an den Innenwänden des Verbindungsstücks eintritt. In bevorzugten Ausführungsformen werden Heiz- oder Kühlelemente vorgesehen, z.B. Wärmeträgerleitungen, welche das Innere auf einer gewünschten Temperatur halten.

Im Verbindungsstück ist vorzugsweise ein Heizelement im Bereich der Überdruck-Freigabekomponente vorgesehen. Durch ein derartiges Element kann ein Fluid im Bereich der Überdruck-Freigabekomponente temperiert werden womit ein Erhärten von erstarrbaren Materialen vermieden wird oder sich die Viskosität des Fluides erniedrigen lässt und ein Ausspülen entweder durch den Durchfluss des Fluids in der Wärmetauscherleitung oder durch die Entlastungsbohrung bewirken lässt. Durch Beheizung kann verhindert werden, dass im Fluid Viskositätsunterschiede im Bereich vor der Überdruck-Freigabekomponente entstehen bzw. sich Fluide ablagern, womit bei Verwendung von thermisch instabilen Fluiden keine exotherm reaktiven Bereiche vor der Überdruck-Freigabekomponente entstehen.

Das Heizelement kann ein elektrisches Heizelement, Induktionsspulen oder Heizkanäle, in denen ein Heizmedium geführt werden kann, aufweisen. Alternativ können derartige Kanäle zum Führen einer Kühlflüssigkeit verwendet werden, wenn das gewählte Fluid im Bereich der Überdruck-Freigabekomponente gekühlt werden soll.

Die Temperierung des Verbindungsstücks wird vorzugsweise derart eingestellt, sodass im Inneren beim Transport eines Fluids wie Cellulose/NMMO/Wasser bei 90°C maximal ein Temperaturunterschied (Temperaturspreizung) von maximal 10°C, vorzugsweise maximal 8°C, maximal 6°C, maximal 5°C, maximal 4°C, maximal 3°C, maximal 2°C, maximal 1°C, im Inneren des Verbindungsstücks, an den Wandabschnitten, inklusive der Überdruck-Freigabekomponente, des Verbindungsstücks, auftritt.

Das Verbindungsstück kann ein Mischelement, wie beispielsweise in der US 7,841,765 beschrieben, aufweisen. Die Erfindung ist nicht auf spezielle Mischelemente limitiert, sondern es können diverse Mischelemente, welche in Wärmetauscherleitungen aufgenommen werden können, ausgewählt werden. Vorzugsweise werden statische Mischelemente verwendet. Das Mischelement soll insbesondere den Fluidstrom im Inneren des Verbindungsstücks, insbesondere im Bereich der Überdruck-Freigabekomponente, durchmischen. Dadurch werden Temperatur-, Viskositäts- und Druckinhomogenitäten des Fluides vermieden, da das Fluid ständig durchmischt und homogenisiert wird. Die durch Mischelemente erzeugte Reibungswärme wird durch die Temperierung des Verbindungsstücks abgeführt. Übliche Mischerelemente sind statische Mischer, wie beispielsweise in der WO 2009/000642 beschrieben, bzw. innentemperierte statische Mischer. Nachdem wie oben erwähnt die hochviskosen Fluide in den Bereichen einer Überdruck-Freigabekomponente abkühlen können, wodurch sich unterschiedliche Temperatur- und Viskositätsverhalten ergeben, resultiert daraus wiederum ein unterschiedliches Fließverhalten des Fluids. Daher wird erfindungsgemäß das Mischelement soweit in die Verteilstücke, bzw. über den Überdruck-Freigabekomponentenbereich eingeführt, dass auch im Bereich der Überdruck-Freigabekomponente, bzw. im gesamten Verbindungsstück eine gute Durchströmung gewährleistet ist.

Erfindungsgemäß hat sich besonders vorteilhaft heraus gestellt, dass die Verbindungsstücke so konstruiert werden und der Einbau der statischen Mischelemente so durchgeführt wird, dass eine aktive Strömungsbeeinflussung im Bereich der Überdruck-Freigabekomponente entsteht bzw. erzwungen wird.

Die Überdruck-Freigabekomponente kann ein Berstelement beliebiger Geometrie, vorzugsweise eine Berstscheibe, sein, welches bei einem vorgegebenen Druck aufbricht und so die Abflussleitung freigibt. Dadurch kann bei Überdruck Fluid durch die Abflussleitung abgeleitet werden, sodass keine Schäden an der Fluidleitung entstehen. Es ist auch möglich Überdruckventile einzusetzen, welche bei einem vorbestimmten Druck öffnen. Im Allgemeinen weist üblicherweise die Überdruck-Freigabekomponente ein Sperrelement, z.B. eine Scheibe auf, welches die Abflussleitung blockiert. Dieses Sperrelement wird bei dem vorbestimmten Überdruck verschoben, verlagert oder entfernt, bzw. geöffnet, z.B. durch Durchbrechen oder Bersten, sodass eine Öffnung zur Abflussleitung entsteht.

Bedingt durch die oben angeführten erfindungsgemäßen Maßnahmen kann nun wie in den unten angeführten Konstruktionsbeispielen auch auf handelsübliche Berstscheiben zurückgegriffen werden. Diese werden vorzugsweise in einer Halterung aufgenommen und in einem Teilstück der Wärmetauscherleitung so platziert, dass die Berstscheiben nicht mehr Teil einer Rohrwand, bzw. Teil des Anschlussstückes, Verteilstückes sind. Insbesondere kann das Berstelement oder die Überdruck-Freigabekomponente im Allgemeinen vom Innenraum des Verbindungsstücks zurückversetzt sein. Dadurch kann ein vom Fluidstrom abgesetzter Bereich im Inneren entstehen. Vorzugsweise wird durch das Mischelement Fluid in diesen Raum geleitet, sodass ein kontinuierlicher Kontakt der Überdruck-Freigabekomponente mit dem vorbeiströmenden Fluid bewerkstelligt wird.

Als Ventile können beliebige Ventile z.B. mit einem Sperrelement, welches, vorzugsweise durch eine Feder oder einer Scherfixierung oder einen Knickstab, in Absperrposition gehalten wird. Durch Druckeinwirkung gibt die Feder, Scherfixierung oder der Knickstab nach, wodurch das Sperrelement verlagert wird und die Abflussleitung freigegeben wird. Scherfixierungen und Knickstäbe (z.B. der US 4,724,857 oder der US 5,577,523) bedingen im Betrieb irreversible Veränderungen, sodass bei einem folgenden Druckabfall die Abflussleitung geöffnet bleibt. Ein Federventil kann bei Druckabfall wieder schließen. Bei einer Scherfixierung wird ein Gestänge, welches mit dem Sperrelement in Verbindung steht, durch Reibungswiderstand in Position fixiert. Ein Überdruck kann den Reibungswiderstand überwinden und das Sperrelement mit dem Gestänge verschieben. Bei einem Knickstab wird ein Gestänge gewählt, welches bei Druckeinwirkung verbogen (Biegeknickung) wird und gemäß der Euler 'schen Formel für Biegeknickungen eine Verschiebung des mit dem Gestänge verbundenen Sperrelements erlaubt.

Die Verbindungsstücke können über verschiedene Anschlussarten in eine Fluidleitung, insbesondere eine Wärmetauscherleitung, eingebaut werden, wie z.B. über Flanschverbindungen, Klemmverbindungen, Gewindeverbindungen, Schweißverbindungen, damit der Verbund zwischen der Wärmetauscherleitung, bzw. den Abschnitten der Leitung hergestellt werden kann. Die Verbindungsstücke können aus entsprechenden Edelstählen, Normalstählen, hoch legierten chemisch resistenten Stählen, sonstigen Metallen und Metall Legierungen, sowie hochfesten Kunststoffen hergestellt werden, die prozessbeständig (d.h. chemisch, temperatur- und druckbeständig) sind. Dem Fachmann ist es überlassen, diese Verbindungsstücke mit Bezug auf Temperatur und Druck zu designen und in die Konstruktion und Fertigung einfließen zu lassen.

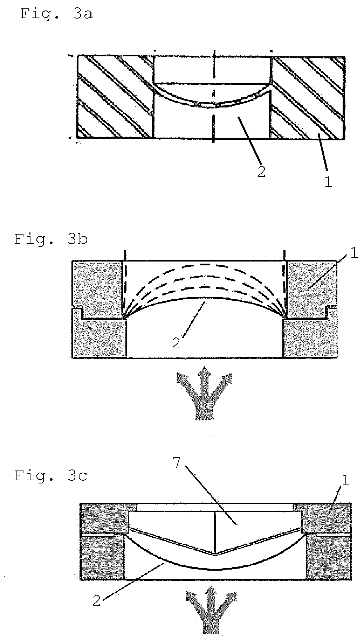

Vorzugsweise wird ein Berstelement eingesetzt, welches großflächig bei einem vorbestimmten Überdruck aufbricht um reichlich Fluidaustritt zu gewährleisten. Wie einleitend erwähnt, existieren Berstelemente, insbesondere Berstscheiben, welche durch Vorsehen entsprechender Merkmale Sollbruchstellen aufweisen um ein kontrolliertes, großflächiges Aufbrechen zu ermöglichen. Erfindungsgemäß können alle bekannten Berstelemente in der Vorrichtung einfach fixiert werden, da die Berstelemente nicht durch beeinträchtigende Verfahren wie Erhitzen durch Schweißen in Mitleidenschaft gezogen werden. Insbesondere wird das Berstelement durch die seitliche Begrenzung fixiert. Die vorliegende Erfindung ermöglicht ein einfaches Fixieren des Berstelements. So kann beispielsweise das Berstelement in einer Halterung in der Innenwand der Abflussleitung fixiert, z.B. eingeklemmt, vorzugsweise angeflanscht, werden. Das Berstelement kann auch in Form einer teilweisen Bohrung (Fig. 3a) als Wandbaustein in die Wand der Abflussleitung eingesetzt werden. Im Abflussrohr kann ein Fixierelement, beispielsweise ein Flansch oder Klemmflansch, zum fixieren des Berstelements aufgenommen werden.

Erfindungsgemäß wurde gefunden, dass bei Verwendung von Berstelementen, welche großflächig aufbersten keine Nachteile durch Toträume beim Transport von viskosen thermisch sensitiven Fluiden entstehen. Ablagerungen werden zusammen mit dem Fluid bei Entstehen eines Überdrucks und dem Bersten des Berstelements leicht ausgespült. In bevorzugten Ausführungsformen werden Berstelemente eingesetzt, welche mindestens zu etwa 70% seiner dem Inneren des Verbindungsstücks zugewandten Fläche, also der exponierten Fläche zwischen den durch die Berstscheibe getrennten Hohlräumen, aufbricht. In weiteren oder besonders bevorzugten Ausführungsformen bricht die Scheibe zu mindestens etwa 20%, 30%, 40%, 50%, 55%, 60%, 65%, 70%, 72%, 74%, 76%, 78%, 80%, 82%, 84%, 86%, 88%, 90%, 92%, 94%, 96%, 98% oder zu 100%, d.h. die komplette durch die Berstscheibe versperrte Fläche kann bei Überdruck freigegeben werden.

Neben der Verwendung von (beliebigen) Berstelementen können gleichfalls nun auch Ventile oder allgemein Überdruck-Freigabekomponenten erfindungsgemäß eingesetzt werden. Die Überdruck-Freigabekomponente, inklusive Ventile können in einer Halterung in der Innenwand der Abflussleitung fixiert werden. Die Überdruck-Freigabekomponente bzw. deren Sperrelemente können für die jeweilig vorgesehenen Anwendungen entsprechend dimensioniert werden. Vorzugsweise können sie mindestens etwa 20%, 30%, 40%, 50%, 55%, 60%, 65%, 70%, 72%, 74%, 76%, 78%, 80%, 82%, 84%, 86%, 88%, 90%, 92%, 94%, 96%, 98% oder zu 100% ihrer zum Inneren des Verbindungsstücks zugewandten Fläche bei Überdruck freigeben. Die Überdruck-Freigabekomponenten bez. deren Sperrelemente können mit der Innenwand der Leitung im Inneren des Verbindungsstücks bündig oder zurückversetzt ausgestaltet werden. Die bündige Ausgestaltung ist insbesondere bei Ventilen ein Vorteil, da eine komplette Totraumfreiheit, auch im Bereich von kleiner als 1mm, möglich ist, welche bei der Fixierung von Berstelement nur schwer technisch gestaltbar ist. Die Form der Sperrelemente der Ventile ist daher vorzugsweise der Innenwand des Verbindungsstücks bündig angepasst, sodass keine Toträume entstehen.

Vorzugsweise entspricht der Querschnitt der Abflussleitung und oder der trennenden Fläche des Berstelements im Vergleich zum Querschnitt der Fluidleitung des Inneren des Verbindungsstücks mindestens 20%, mindestens 25%, mindestens 30%, mindestens 35%, mindestens 40%, mindestens 50%, mindestens 55%, mindestens 60%, mindestens 65%, mindestens 70%, mindestens 75%, oder mindestens 80%.

In weiteren Ausführungsformen kann ein Schneidelement, z.B. ein (Spreng)Dorn oder ein Messer, in der Abflussleitung derart positioniert sein, sodass bei Überdruck im Verbindungsstück das Berstelement gegen den Sprengdorn oder das Messer gepresst wird und dadurch aufbricht. Dies erlaubt die Verwendung von besonders einfachen und günstigen Berstelementen - auch ohne eigene Merkmale zum großflächigen Aufbrechen wie Sollbruchstellen. Durch einen Dorn oder ein Messer, gegen den/das die Berstscheibe bei Überdruck gepresst wird können auch einfachste Berstscheiben großflächig aufbrechen. Je nach Druck, welche sich beim Transport von viskosen Fluiden einstellen, kann von einem "Aufsprengen" durch diese an sich einfachen Mittel geredet werden.

Vorzugsweise ist das Berstelement eine Berstscheibe. Weitere Berstelemente können rund, elliptisch, kreisförmig, quadratisch oder vieleckig, (insb. regelmäßig vieleckig) ausgeführt sein. In der Regel handelt es sich um flache Scheiben. Simple Berstelemente können einfach aus einem Blech ausgestanzt werden.

Das Berstelement kann flach oder gewölbt sein. In speziellen Ausführungsformen ist das Berstelement dem Inneren des Verbindungsstücks entgegen oder zugewandten Fläche mittig gewölbt, also konkav bzw. konvex zur Richtung dem Inneren des Verbindungsstücks. Durch den (Über-)Druck kann sich die Wölbung vergrößern, was zum Bersten oder zum Pressen gegen einen Sprengdorn oder ein Messer führt. In vorzugsweisen Ausführungsformen wird das Messer in Form eines Messerkreuzes vorgesehen. Bei konvexen Wölbungen kann sich die Wölbung durch Druckausübung umkehren und Spannungen im Berstelement hervorrufen, die ein Aufbrechen bewirken.

Vorzugsweise wird eine Bohrung zwischen der Überdruck-Freigabekomponente und dem Inneren des Verbindungsstücks vorgesehen. Diese Bohrung kann der kontrollierten Druck-Entlastung des Innenraumes oder der Temperatur- oder Druckkontrolle dienen. Das erfindungsgemäße Anschluss, Verteilstück kann mit entsprechenden Bohrungen versehen werden, damit Druck und Temperatur abgenommen, kontrolliert und überwacht werden können. Bei der Förderung von hochsensitiven Polymermassen (z.B. Celluloselösungen bestehend aus Cellulose, Aminoxid und Wasser) hat es sich erfindungsgemäß auch als vorteilhaft erwiesen, dass in dieses Anschlussstück auch noch eine zusätzliche Bohrung angebracht werden kann, damit die Qualität der Polymermasse, beginnend von der Lösungsherstellung bis zur Verarbeitung abschnittsweise hinsichtlich der Qualität der Spinnmasse mit Bezug auf die Lösungsviskosität und Spinnmassezusammensetzung sowie das Abbauverhalten kontrolliert werden kann. Die Bohrung kann daher eine Entnahmebohrung sein. Daher muss man eine Probenahmenstelle nicht in die Fluidleitung direkt einbauen. Wird eine Probenahmenstelle vorgesehen, so kann ein speziell konstruiertes Probenahmeventil derart ausgeführt sein, dass sich im Probenahmekanal nach Probenahme keine Restmasse befindet, da diese in den Hauptstrom zurückgedrängt wird.

In speziellen Ausführungsformen wird diese Bohrung unmittelbar vor der Überdruck-Freigabekomponente vorgesehen. Die Bohrung kann dazu verwendet werden um abgelagerte viskose Fluide vor der Überdruck-Freigabekomponente abzuführen, z.B. zur Probenahme, bzw. dessen Temperatur oder Druck zu messen. Daher weist die Bohrung in vorzugsweisen Ausführungsformen einen Temperatur- und/oder Drucksensor auf. Temperatur- oder Drucksensoren können eingesetzt werden um bei Abweichungen von einer Solltemperatur oder einem Solldruck durch die Bohrung Fluid abzulassen. Dieser Ablass kann kontinuierlich oder sporadisch vorgenommen werden. Hierzu weist die Entlastungsbohrung vorzugsweise ein verschließbares Ventil auf.

Das erfindungsgemäße Verbindungsstück kann vorzugsweise in Form eines Verbindungselements, zum Verbinden von Rohren, im speziellen in Form eines komplett zusammengebauten massiven Blocks, zur Verfügung gestellt werden. Das Verbindungsstück kann in einem Apparateverband z.B. von Reaktoren, Pumpen, Druckbehältern, Filtern, Wärmetauscherleitungen, Wärmetauschern, und/oder Extrudern eingesetzt werden.

Die Überdruck-Freigabekomponente, z.B. das Berstelement oder das Ventil, kann aus verschiedenen Materialien hergestellt sein, wie Stahl, Edelstahl, Keramik, Sintermetallen, Aluminium, Kunststoff, Buntmetallen, Edelmetallen. Bevorzugte Werkstoffe sind alle Eisen, Eisenlegierungen, Chrom-Nickelstähle, Nickelstähle (z.B. Hastelloy Materialien), Titan, Tantal, Sili- ziumcarbid, Glas, Keramik, Gold, Platin und auch Kunststoffe. Spezielle Materialien sind Legierungen mit hohem Molybdängehalt, bzw. Nickel, Chrom, und Molybdän Legierungen zur Beständigkeit gegen Lochfraß und Spaltkorrosion, Nickel-Kupfer-Legierungen mit hoher Zugfestigkeit. Materialbeispiele sind Hastelloy C (hohe Korrosionsfestigkeit), Hastelloy B (ausscheidungshärtende Hochtemperaturlegierung), Inconel (Beständigkeit gegen Span- nungskorrosionsrissen in petrochemischen Anwendungen), Incoloy (hohe Festigkeit als auch Beständigkeit gegen hohe Temperaturen und gegenüber Oxidierung und Aufkohlung), Monel (hohe Zugfestigkeit, beständig gegenüber Korrosion).

In vorzugsweisen Ausführungsformen ist die Überdruck-Freigabekomponente für den Transport von Fluiden durch das Verbindungselement bei hohen Drücken von mindestens 40 bar bis 1000 bar, vorzugsweise mindestens 50 bar, mindestens 70 bar, mindestens 100 bar, mindestens 200 bar, mindestens 300 bar, mindestens 400 bar, mindestens 500 bar, mindestens 600 bar, mindestens 700 bar, mindestens 800 bar, eingerichtet, z.B. durch Wahl geeigneter Materialien bzw. Materialstärken und Dimensionen. In weiteren Ausführungsformen ist die Überdruck-Freigabekomponente für den Transport von Fluiden durch das Verbindungselement bei hohen Drücken bis maximal 1000 bar, vorzugsweise bis 60 bar, bis 80 bar, bis 120 bar, bis 250 bar, bis 350 bar, bis 450 bar, bis 550 bar, bis 650 bar, bis 750 bar, bis 900 bar, eingerichtet.

Die vorliegende Erfindung liefert weiters ein Verfahren zum Transport eines viskosen Fluids durch das Verbindungsstück, welchem ein Verbindungsstück bzw. eine Überdruckentlastungsvorrichtung mit einer Überdruck-Freigabekomponente gemäß der Erfindung zugeordnet ist. Die Erfindung betrifft die Verwendung des erfindungsgemäßen Verbindungsstücks bzw. der erfindungsgemäßen Überdruckentlastungsvorrichtung in einer Wärmetauscherleitung, insbesondere zum oder während dem Transport eines viskosen Fluids durch die Wärmetauscherleitung. Das Verbindungselement kann beispielsweise zwischen einzelnen Bauteilen einer Wärmetauscherleitung zum Transport eines viskosen Fluids angebracht sein. So betrifft die Erfindung auch ein Verfahren zum Transport eines viskosen Fluids durch eine Wärmetauscherleitung, welche ein Verbindungsstück umfasst, wobei das Verbindungsstück eine Überdruck-Freigabekomponente aufweist, welches zwei Hohlräume der Überdruckentlastungsvorrichtung trennt, wobei ein Hohlraum mit dem Inneren des Verbindungsstücks bzw. der Wärmetauscherleitungverbunden ist, wobei die Überdruck-Freigabekomponente bei einem Überdruck im Inneren eine Öffnung freigibt, sodass ein Fluiddurchfluss zwischen den Hohlräumen der Überdruckentlastungsvorrichtung eintritt.

Vorzugsweise ist das viskose Fluid thermisch instabil. Thermisch instabile Fluide sind beispielsweise Cellulose-Lösungen, wie Cellulose Aminoxid Lösungen, in speziellen Lösungen von tertiärem Aminoxid und Wasser. Solche Lösungen können neben Stabilisatoren wie z.B. Gallussäurepropylester, organische oder anorganische Basen wie z.B. Natronlauge enthalten. Weiters können solche Cellulose/Aminoxid und Wasser Lösungen auch produktverändernde Additive, sogenannte Inkorporationsmedien, enthalten. Celluloselösungen, im Aminoxidsystem hergestellt, zeichnen sich dadurch aus, dass sie beim Erkalten kristallisieren aber bei einer Temperatur von ca. 72 - 75 °C geschmolzen werden können. Ein Beispiel ist eine Cellulose-NMMO- Lösung wie in der EP 789 822 beschrieben. Das Fluid kann eine wässrige Aminoxidlösung unterschiedlicher Konzentrationen sein. Thermisch instabile Fluide sind solche, bei denen die Gefahr einer Temperaturerhöhung während dem Transport durch das Verbindungsstück bzw. die Wärmetauscherleitung besteht. Temperaturerhöhungen können z.B. aufgrund von exothermen Reaktionen, insbesondere chemischen Reaktionen, oder aufgrund von Reibungswärme beim Transport hochviskoser Fluide auftreten. Weitere Fluide sind insbesondere erstarrbare Fluide, insbesondere "hot-melts", wie Polymere, Polycarbonate, Polyester, Polyamide, Polymilchsäure, Polypropylen, etc. Das Fluid kann ein thixotropes Fluid, insbesondere eine Spinnlösung, sein. Spezielle Fluide haben eine Schmelztemperatur von mindestens ca. 40°C, mindestens 50°C, mindestens 55°C, mindestens 60°C, mindestens 65°C, mindestens 70°C, mindestens 75°C. Das Fluid kann bei beispielhaften Temperaturen von mindestens ca. 40°C, mindestens 50°C, mindestens 55°C, mindestens 60°C, mindestens 65°C, mindestens 70°C, mindestens 75°C, mindestens ca. 80°C, mindestens 85°C, mindestens 90°C, mindestens 95°C, geführt werden. Das Verbindungsstück ist für den Transport dieser Fluide über den Schmelztemperaturen - z.B. gemäß gewählter Temperiermittel - ausgelegt. Vorzugsweise ist die Nullscherviskosität des Fluids im Bereich von 100 bis 15.000 Pas, insbesondere zwischen 500 bis 10.000 Pas.

Die Überdruck-Freigabekomponente bzw. das Sperrelement oder das Berstelement wird vorzugsweise für entsprechend der vorgesehenen Fluidflüsse (bzw. Drücke) dimensioniert. Vorzugsweise ist die Fläche der Überdruck-Freigabekomponente bzw. des Sperrelements oder des Berstelements zwischen 0,01 und 0,4 mm² pro kg des transportierten Fluids, insbesondere zwischen 0,02 und 0,3 mm² pro kg.

Die vorliegende Erfindung wird weiter durch die folgenden Figuren und Beispiele illustriert ohne auf diese speziellen Ausführungsformen der Erfindung beschränkt zu sein.

### Figuren:

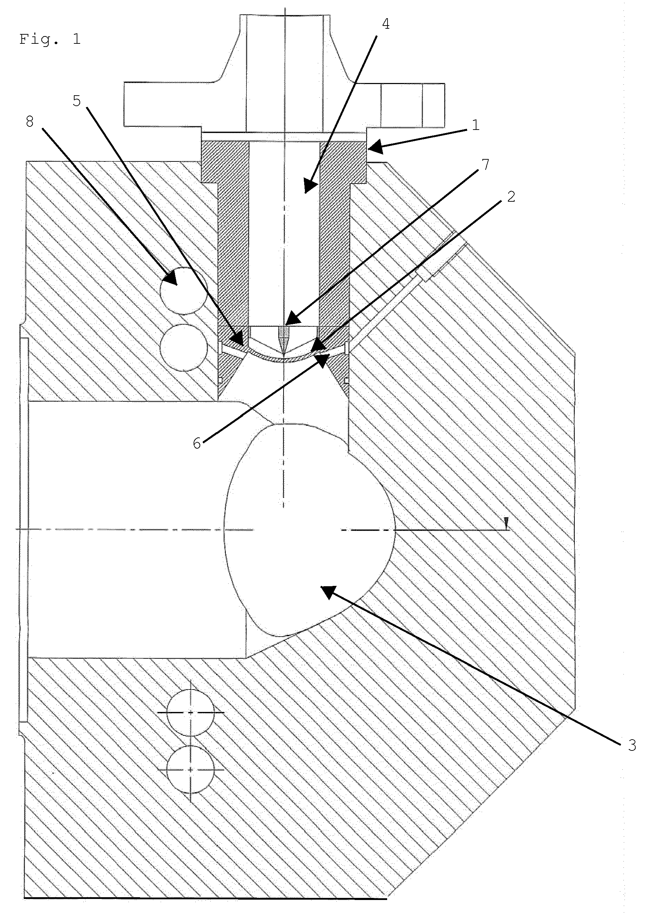

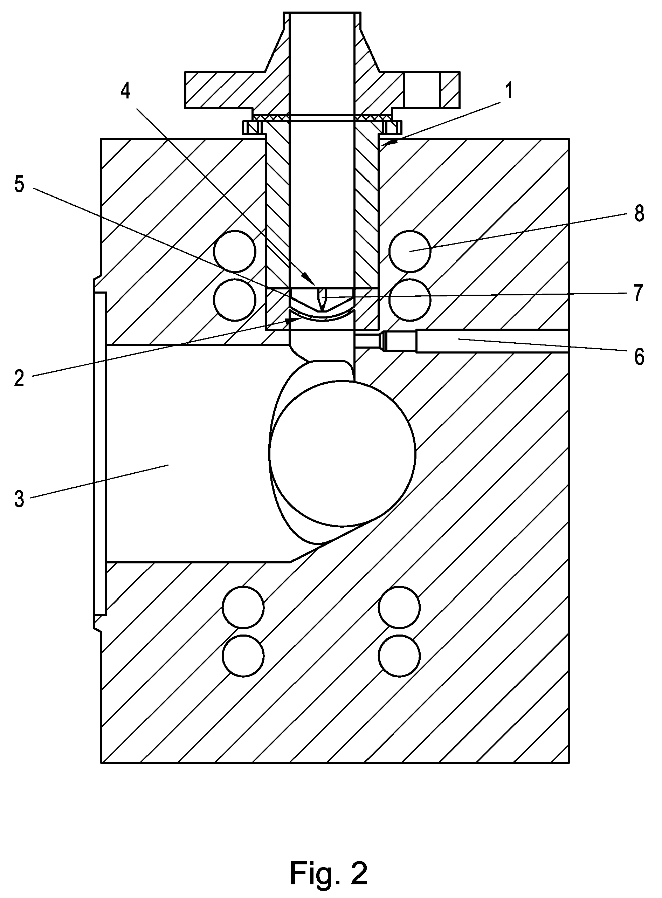

Figuren 1 und 2 zeigen Schnitte durch Verbindungsstücke 1 mit einem Berstelement in Form einer Berstscheibe 2 mit zugeordneter vorbeileitenden Fluidleitung 3, welche hier gekrümmt aus der Darstellungsebene herausführend vorgesehen ist, einer Abflussleitung 4 an deren Rand 5 die Berstscheibe befestigt ist, einer Bohrung 6, einem Sprengdorn 7 sowie einer Heizleitung 8.
Figur 3 zeigt verschiedene Berstelemente, nämlich eine durch Bohrung aus einem Wandblock gedrehte Berstscheibe (a), eine konkave Berstscheibe, welche bei verstärkter erzwungener Wölbung bricht (b), und eine Berstscheibe mit Bruchmesser (b). Die Berstscheiben b) und c) sind durch Einklemmung am Rand fixiert.

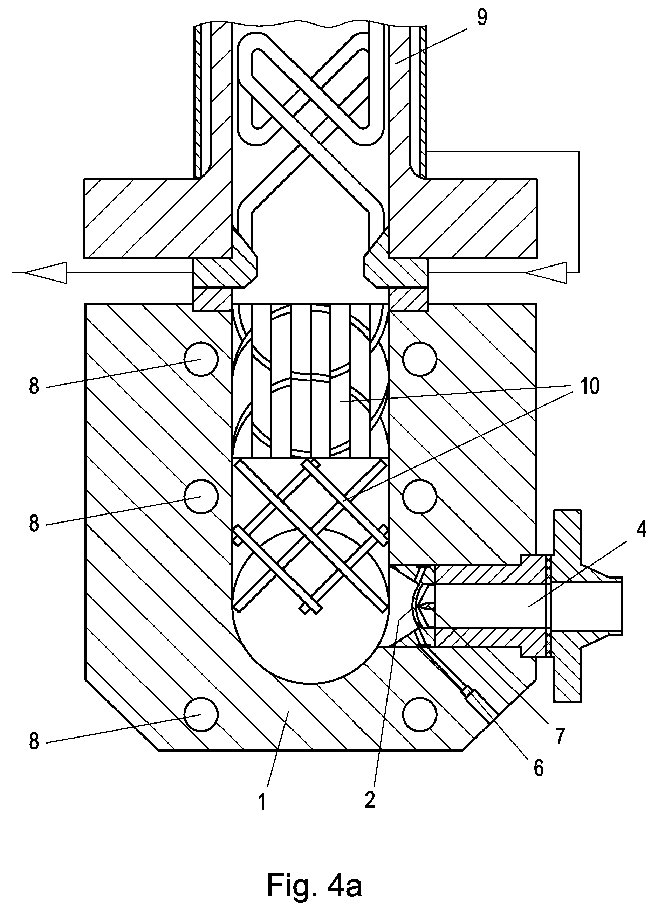

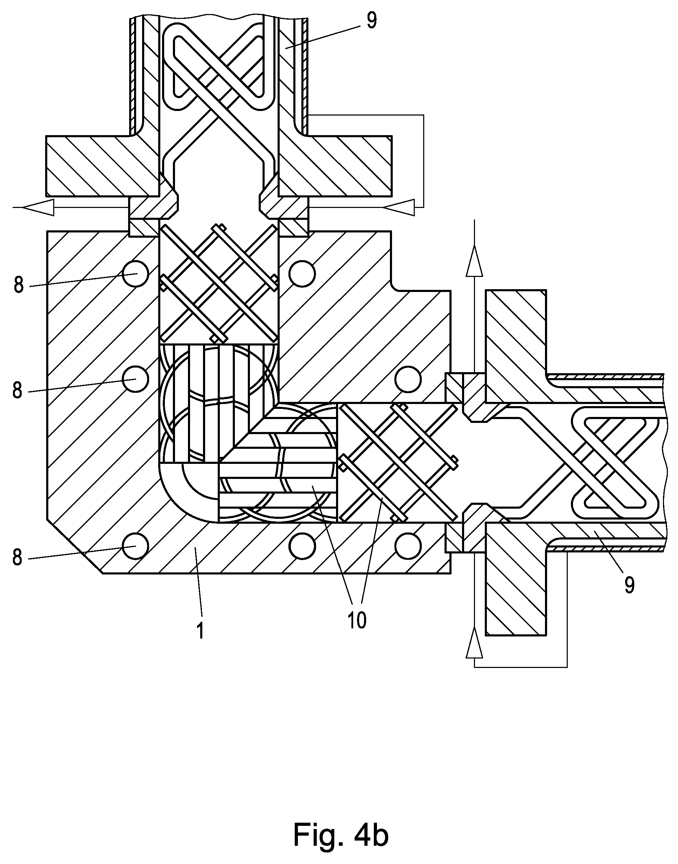

Figur 4 zeigt zwei Schnitte a) und b), mit einem Verbindungsstück 1, welches zwei Wärmetauscher 9 verbindet, zusätzlich mit Mischelementen 10, gemäß der WO 2009/000642.

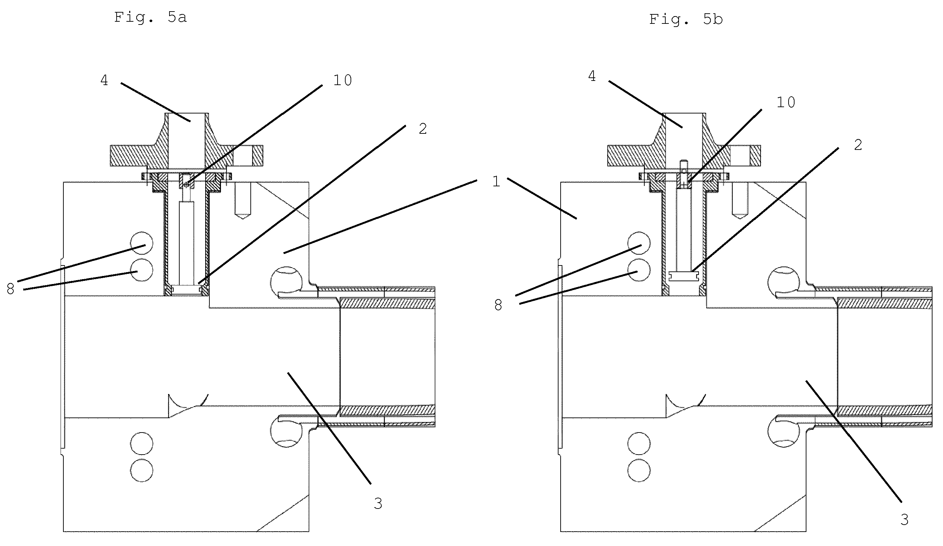

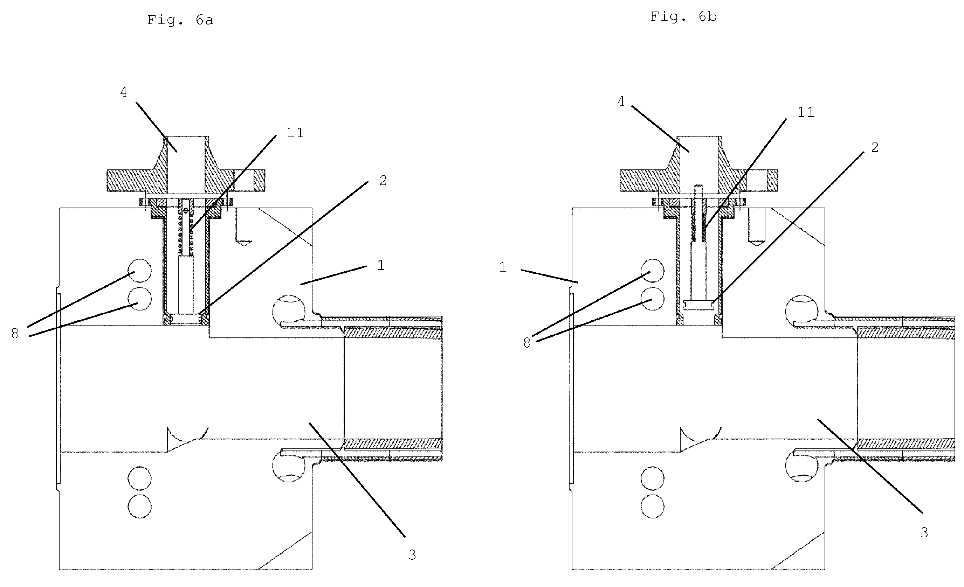

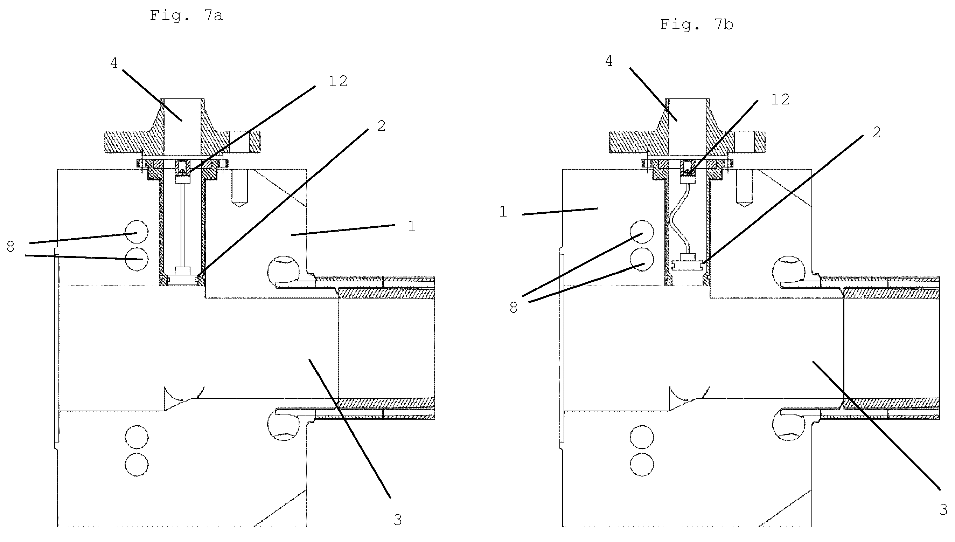

Figuren 5 bis 7 zeigen Schnitte durch erfindungsgemäße Verbindungsstücke 1 mit unterschiedlichen Ventilen mit Sperrescheiben 2 in geschlossener (Fig. 5a, 6a, 7a) und geöffneter (Fig. 5b, 6b, 7b) Position. Die Fluidleitung 3 und Abflußleitung 4 sowie Abflussleitungen 8 sind ebenfalls dargestellt. Die Sperrscheibe 2 ist mit einem Gestänge 9 verbunden, welches durch einen Scherring 10 (Fig. 5) oder eine Feder 11 (Fig. 6) oder eine Halterung 12 (Fig. 7), letzteres in der Knickstabausführung), fixiert ist, wobei die bei Überdruckeinwirkung eine Verschiebung auftritt.

### Beispiel 1:

Gemäß diesem Beispiel wird ein Verbindungsstück, wie in Fig. 4 dargestellt, eingesetzt.

In dieser Form werden durch das Verbindungsstück zwei Wärmetauscherleitungen (Länge jeweils 3m) verbunden. Ableitend vom Verbindungsstück ist eine Abflussleitung 4 vorgesehen welche nicht im regulären Strömungsverlauf des durch die Wärmetauscherleitungen geführten Fluids liegt, aber mit diesem in Kontakt steht. Eine Berstscheibe 2 verhindert den Abfluss bei Normalbetrieb. Bei kritischem Überdruck wird sie gegen ein Schneidmesserkreuz 7 gepresst und wird dabei aufgesprengt, womit die Abflussleitung zur Abführung des Fluids freigegeben wird. In regelmäßigen Abständen wird der Druck und die Temperatur durch Sensoren vor der Berstscheibe kontrolliert bzw. Proben des Fluids durch die Entlastungsbohrung 6 entnommen. Ein Mischelement 10 bewirkt Temperatur-, Viskositäts- und Druckausgleich des Fluids. Der Innendurchmesser der Wärmetauscher und des Verbindungsstücks betrug 108 mm.

Im Betrieb wurde dieses Element mit einer Cellulose-NMMO-Wasser Lösung (Cellulose: 12, 9%, NMMO 76, 3%, Wasser 10, 8%, alle % in gew.-%) bei einer Temperatur von 90°C und einem Druck von 30 bar getestet. Die Lösung wurde in den ersten Wärmetauscher über eine Pumpe unter Druck eingebracht. Am Ende des zweiten Wärmetauschers befand sich ein Filter um den Druck in der Leitung aufrecht zu erhalten.

An den Temperatur- und Drucksensoren 6 konnten während des Probebetriebs keine unregelmäßigen Temperaturen und Drücke festgestellt werden. Bei einem simulierten Überdruck von 100bar barst die Berstscheibe wodurch der Druck unter den normalen Arbeitsdruck fiel.

An der Entlastungsbohrung 6 wurden in regelmäßigen Abständen Fluidproben entnommen, hinsichtlich ihrer thermischen Stabilität mittels DSC-Analyse untersucht und mit der Stabilität von "frischer" Cellulose-NMMO-Wasser Lösung verglichen. Selbst nach einer Laufzeit von mehreren Tagen konnte keine Reduktion der thermischen Stabilität der Cellulose-NMMO-Wasser Lösung im Bereich der Berstscheibe im Vergleich zu "frischer" Lösung festgestellt werden.

### Beispiel 2:

Durch ein Wärmetauscherleitungssystem bestehend aus Wärmetauschern und den erfindungsgemäßen Verbindungsstücken als Verteilstücken wurde eine Polymerlösung - zur Verwendung als Spinnlösung mit folgender Zusammensetzung von der Spinnlösungsherstellung bis zur Verarbeitung dieser an einer Spinnmaschine transferiert.

Die Spinnmasse bestehend aus einer Mischung von Zellstoffen des Typs MoDo Crown Dissolving-DP 510-550 und Sappi Saiccor DP 560-580 wurden in folgender Zusammensetzung kontinuierlich hergestellt Cellulose 12,9%; Aminoxid (NMMO - N-Methyl-Morpholin-N-Oxid) 76,3 %; Wasser 10,8%.

Die Lösungsherstellung erfolgte nach erfolgter wässriger enzymatischer Vorbehandlung und Suspensionsherstellung durch Abdampfen von überschüssigem Wasser unter Vakuum in einem kontinuierlich durchströmten Reaktionsgefäß bei einer Temperatur von 97 bis 103°C. Zur Stabilisierung des Lösungsmittels NMMO/Wasser wurden bekannte Stabilisatoren zugesetzt. Die Stabilisierung der Celluloselösung erfolgt wie bekannt mit Gallussäurepropylester. Zur sicherheitsgerichteten Lösungsherstellung wird der Schwermetallionengehalt kontrolliert und einen Wert von 10 ppm als Summenparameter (aus Metallionen und Buntmetallionen) nicht überschritten.

Die Dichte der hergestellten Lösung beträgt bei Raumtemperatur 1.200 kg/m³. Die über die Zellstoff Mischungskomponenten eingestellte Nullscherviskosität der Spinnmasse kann, gemessen bei 75°C, bis zu 15.000 Pas betragen. Je nach der im Spinnprozess gewählten Verarbeitungstemperatur kann sich die Nullscherviskosität im Bereich von 500 bis 15.000 Pas bewegen. Bedingt durch das strukturviskose Verhalten der Spinnlösung fällt die Viskosität bei Spinnscherraten je nach gewählter Verarbeitungstemperatur auf einen Bereich von unter 100 Pas ab und ist ebenfalls stark abhängig von der Cellulosekonzentration in der Spinnlösung.

An den Verbindungsstücken wurde an den Probenahmeöffnungen während des Durchleitens Polymermasse zur Temperaturmessung und Viskositätsmessung entnommen, wobei die im Verbindungsstück angebrachte Berstscheiben auf einen spezifischen Durchsatz pro mm² Berstfläche dimensioniert war.

| Probenahmeöffnung über Verteilstück | spez. Berstscheibendimensionierung kg Polymermasse / mm2 Berstscheibenfläche | Temperatur °C | Temperaturabweichung +/- in °C* | Viskosität 90 in Pas bei 90°C | Viskositätsabweichung ç₀ in Pas* bei 90°C +/- |
|---|---|---|---|---|---|
| Reaktor | 0,11 | 101,5 | 2,4 | 1270 | 98 |
| nach Wärmetauscher | 0,08 | 96,5 | 0,8 | 2080 | 85 |
| nach Filter | 0,05 | 97,3 | 1,3 | 1550 | 73 |
| nach Pumpe - Verteilunq | 0,15 | 95,8 | 0,9 | 2200 | 67 |
| Verteilung-Spinnmaschine | 0,04 | 91,5 | 1,1 | 3650 | 54 |

Abweichungen bzgl. Temperatur und Viskosität wurde über 10 Einzelmessungen und unter der Bildung des Mittelwertes festgestellt.

## Patentansprüche

1. Temperiertes Verbindungsstück (1) zum Transport eines viskosen Fluids mit einer Fluidleitung (3) und mit einer Überdruck-Freigabekomponente (2), welche das Innere der Fluidleitung von einer Abflussleitung (4) trennt und mit einem äußeren Rand (5) an der Abflussleitung fixiert ist, wobei die Überdruck-Freigabekomponente eingerichtet ist, bei einem vorgegebenen Überdruck die Abflussleitung freizugeben und wobei im Inneren der vorbeileitenden Fluidleitung (3) ein Mischelement (10) vorgesehen ist, welches einen Fluidstrom im Bereich der Überdruck-Freigabekomponente durchmischt.

2. Verbindungsstück nach Anspruch 1, **dadurch gekennzeichnet, dass** die Überdruck-Freigabekomponente vom Innenraum des Verbindungsstücks zurückversetzt ist.

3. Verbindungsstück nach Anspruch 1, **dadurch gekennzeichnet, dass** die Überdruck-Freigabekomponente ein Berstelement, vorzugsweise eine Berstscheibe, oder ein Überdruckventil ist.

4. Verbindungsstück nach einem der Ansprüche 1 bis 3, **dadurch gekennzeichnet, dass** die Überdruck-Freigabekomponente bei Überdruck großflächig zumindestens 70% ihrer zum Inneren des Verbindungsstücks zugewandten Fläche freigibt.

5. Verbindungsstück nach einem der Ansprüche 1 bis 4, **dadurch gekennzeichnet, dass** das Verbindungsstück durch eine thermische Isolierung des Verbindungsstücks und/oder durch Heiz- oder Kühlelemente (8) temperierbar ist.

6. Verbindungsstück nach einem der Ansprüche 1 bis 5, **dadurch gekennzeichnet, dass** es eine Bohrung (6) zur Entnahme von Fluid aus dem Inneren des Verbindungsstücks vor der Überdruck-Freigabekomponente aufweist, vorzugsweise unmittelbar vor der Überdruck-Freigabekomponente.

7. Verbindungsstück nach einem der Ansprüche 1 bis 6, **dadurch gekennzeichnet, dass** es eine Bohrung (6) zur Aufnahme eines Temperatur- und/oder Drucksensors hat, vorzugsweise unmittelbar vor der Berstscheibe, wobei optional die Bohrung gleichzeitig zur Entnahme von Fluid aus dem Inneren des Verbindungsstücks geeignet ist.

8. Verbindungsstück nach Anspruch 6 oder 7, **dadurch gekennzeichnet, dass** die Bohrung ein verschließbares Ventil aufweist.

9. Verbindungsstück nach einem der Ansprüche 1 bis 8, **dadurch gekennzeichnet, dass** die Überdruck-Freigabekomponente ein Berstelement ist und ein Schneidelement, vorzugsweise ein Sprengdorn (7) oder Messer, in der Abflussleitung derart positioniert ist, sodass bei Überdruck im Verbindungsstück das Berstelement gegen das Schneidelement gepresst wird und dadurch aufbricht.

10. Verbindungsstück nach einem der Ansprüche 1 bis 9, **dadurch gekennzeichnet, dass** die Überdruck-Freigabekomponente ein Berstelement ist, welches mittig gewölbt ist, vorzugsweise in Richtung des Inneren des Verbindungsstücks konvex oder konkav gewölbt.

11. Verbindungsstück nach einem der Ansprüche 1 bis 10, **dadurch gekennzeichnet, dass** zumindest ein Wärmeträgerkanal (8) im Bereich der Überdruck-Freigabekomponente vorgesehen ist.

12. Verbindungsstück nach einem der Ansprüche 1 bis 11, **dadurch gekennzeichnet, dass** die Überdruck-Freigabekomponente in eine Halterung in der Innenwand der Abflussleitung eingeklemmt ist, vorzugsweise angeflanscht ist.

13. Verfahren zum Transport eines viskosen Fluids durch eine Wärmetauscherleitung, welche ein Verbindungsstück nach einem der Ansprüche 1 bis 12 enthält.

14. Verfahren nach Anspruch 13, **dadurch gekennzeichnet, dass** das viskose Fluid thermisch instabil ist.

15. Verfahren nach Anspruch 13 oder 14, **dadurch gekennzeichnet, dass** das viskose Fluid eine Cellulose-Lösung ist.

## Claims

1. A temperature-regulated connecting piece (1) for transporting a viscous fluid with a fluid line (3) and with an excess pressure release component (2), which separates the interior of the fluid line from a discharge line (4) and is fixed with an outer edge (5) to the discharge line, **characterised in that** the excess pressure release component is provided so as to free the discharge line in the presence of a preset excess pressure and wherein a mixing element is provided in the interior of the fluid line (3) leading past, said mixing element thoroughly mixing a fluid flow in the region of the excess pressure release component.

2. The connecting piece according to claim 1, **characterised in that** the excess pressure release component is set back from the interior of the connecting piece.

3. The connecting piece according to claim 1, **characterised in that** the excess pressure release component is a bursting element, preferably a bursting disc, or an excess pressure valve.

4. The connecting piece according to any one of claims 1 to 3, **characterised in that**, in the presence of excess pressure, the excess pressure release component frees a large area, at least 70%, of its area facing the interior of the connecting piece.

5. The connecting piece according to any one of claims 1 to 4, **characterised in that** the connecting piece can be temperature-regulated by means of thermal insulation of the connecting piece and/or by means of heating or cooling elements (8).

6. The connecting piece according to any one of claims 1 to 5, **characterised in that** it comprises a bore (6) for sampling fluid from the interior of the connecting piece before the excess pressure release component, preferably immediately before the excess pressure release component.

7. The connecting piece according to any one of claims 1 to 6, **characterised in that** it has a bore (6) for accommodating a temperature and/or pressure sensor, preferably immediately before the bursting disc, wherein the bore is optionally suitable at the same time for sampling fluid from the interior of the connecting piece.

8. The connecting piece according to claim 6 or 7, **characterised in that** the bore is a closable valve.

9. The connecting piece according to any one of claims 1 to 8, **characterised in that** the excess pressure release component is a bursting element, and a cutting element, preferably a bursting spike (7) or a blade, is positioned in the discharge line in such a way that, in the presence of excess pressure in the connecting piece, the bursting element is pressed against the cutting element and thus bursts open.

10. The connecting piece according to any one of claims 1 to 9, **characterised in that** the excess pressure release component is a bursting element which is curved centrally, preferably curved convex or concave in the direction of the interior of the connecting piece.

11. The connecting piece according to any one of claims 1 to 10, **characterised in that** at least one heat carrier channel (8) is provided in the region of the excess pressure release component.

12. The connecting piece according to any one of claims 1 to 11, **characterised in that** the excess pressure release component is clamped, preferably flange-mounted, in a holding fixture in the inner wall of the discharge line.

13. A method for transporting a viscous fluid through a heat exchanger line, which includes a connecting piece according to any one of claims 1 to 12.

14. The method according to claim 13, **characterised in that** the viscous fluid is thermally unstable.

15. The method according to claim 13 or 14, **characterised in that** the viscous fluid is a cellulose solution.

## Revendications

1. Pièce de liaison tempérée (1) pour le transport d'un fluide visqueux avec une conduit de fluide (3) et avec un composant de libération à surpression (2), qui sépare l'intérieur de la conduite de fluide d'une conduite d'évacuation (4) et qui est fixée avec un bord extérieur (5) à la conduite d'évacuation,
le composant de libération à surpression étant conçu pour libérer la conduite d'évacuation dans le cas d'une surpression prédéterminée et, à l'intérieur de la conduite de fluide (3), un élément de mélange (10) étant prévu, qui mélange un écoulement de fluide au niveau du composant de libération à surpression.

2. Pièce de liaison selon la revendication 1, **caractérisée en ce que** le composant de libération à surpression est décalé vers l'arrière par rapport à l'intérieur de la pièce de liaison.

3. Pièce de liaison selon la revendication 1, **caractérisée en ce que** le composant de libération à surpression est un élément de rupture, de préférence un disque de rupture ou une soupape de surpression.

4. Pièce de liaison selon l'une des revendications 1 à 3, **caractérisée en ce que** le composant de libération à surpression libère, sur une grande surface, au moins 70 % de sa surface orientée vers l'intérieur de la pièce de liaison dans le cas d'une surpression.

5. Pièce de liaison selon l'une des revendications 1 à 4, **caractérisée en ce que** la pièce de liaison peut être tempérée par une isolation thermique de la pièce de liaison et/ou par des éléments de chauffage ou de refroidissement (8).

6. Pièce de liaison selon l'une des revendications 1 à 5, **caractérisée en ce qu'**elle comprend un alésage (6) pour le prélèvement de fluide hors de l'intérieur de la pièce de liaison devant le composant de libération à surpression, de préférence directement devant le composant de libération à surpression.

7. Pièce de liaison selon l'une des revendications 1 à 6, **caractérisée en ce qu'**elle comprend un alésage (6) pour le logement d'un capteur de température et/ou de pression, de préférence directement devant le disque de rupture, l'alésage étant en option également conçu pour le prélèvement de fluide hors de l'intérieur de la pièce de liaison.

8. Pièce de liaison selon la revendication 6 ou 7, **caractérisée en ce que** l'alésage comprend une soupape pouvant être fermée.

9. Pièce de liaison selon l'une des revendications 1 à 8, **caractérisée en ce que** le composant de libération à surpression est un élément de rupture et un élément de coupe, de préférence un mandrin explosif (7) ou un couteau est disposé dans la conduite d'évacuation de façon à ce que, dans le cas d'une surpression dans la pièce de liaison, l'élément de rupture soit comprimé contre l'élément de coupe et se casse.

10. Pièce de liaison selon l'une des revendications 1 à 9, **caractérisée en ce que** le composant de libération à surpression est un élément de rupture qui est incurvé au centre, de préférence incurvé de manière convexe ou concave en direction de l'intérieur de la pièce de liaison.

11. Pièce de liaison selon l'une des revendications 1 à 10, **caractérisée en ce qu'**au moins un canal caloporteur (8) est prévu au niveau du composant de libération à surpression.

12. Pièce de liaison selon l'une des revendications 1 à 11, **caractérisée en ce que** le composant de libération à surpression est serré dans une fixation dans la paroi intérieure de la conduit d'évacuation, de préférence bridé.

13. Procédé pour le transport d'un fluide visqueux par l'intermédiaire d'une conduite d'échangeur thermique, qui comprend une pièce de liaison selon l'une des revendications 1 à 12.

14. Procédé selon la revendication 13, **caractérisé en ce que** le fluide visqueux est thermiquement instable.

15. Procédé selon la revendication 13 ou 14, **caractérisé en ce que** le fluide visqueux est une solution de cellulose.
